(19) **Europäisches Patentamt**
**European Patent Office**
**Office européen des brevets**

(11) **EP 0 966 092 A1**

(12) **DEMANDE DE BREVET EUROPEEN**

(43) Date de publication:
**22.12.1999 Bulletin 1999/51**

(51) Int Cl.⁶: **H02M 3/335**

(21) Numéro de dépôt: **99401221.9**

(22) Date de dépôt: **20.05.1999**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **15.06.1998 FR 9807523**

(71) Demandeur: **ELECTRICITE DE FRANCE**
**Service National**
**75008 Paris (FR)**

(72) Inventeurs:
• **Buchheit, Nicolas**
**75006 Paris (FR)**
• **Crebier, Jean-Christophe**
**05000 Gap (FR)**
• **Brunello, Marc**
**38920 Grolles (FR)**
• **Ferrieux, Jean-Paul**
**38240 Meylan (FR)**

(74) Mandataire: **Moncheny, Michel et al**
**c/o Cabinet Lavoix**
**2 Place d'Estienne d'Orves**
**75441 Paris Cedex 09 (FR)**

(54) **Convertisseur courant continu-courant continu**

(57)    Ce convertisseur courant continu-courant continu comprend un premier étage (10) de conversion d'une tension continue en tension alternative, un deuxième étage (14) de conversion de la tension alternative délivrée par le premier étage (10) en une tension continue réglable et des moyens (16) d'isolation galvanique interposés entre les deux étages de conversion. Il comporte en outre des moyens de conversion courant continu-courant continu de réglage de la tension de sortie intégrés au deuxième étage (14) de conversion.

**FIG.3**

## Description

La présente invention est relative à un convertisseur courant continu-courant continu à isolation galvanique.

Pour certaines applications, en particulier dans le domaine de l'électronique de puissance, par exemple pour la recharge rapide de batteries de véhicules électriques ou encore la réalisation d'alimentations continues variables, l'alimentation d'appareillages électriques présente des caractéristiques de tension de sortie en fonction du courant de sortie délimitant plusieurs zones de fonctionnement, délimitées par un courant maximum, une tension maximale et une puissance maximale.

Un convertisseur courant continu-courant continu utilisé pour générer une tension et un courant d'alimentation pour ces applications comporte classiquement un premier étage de conversion d'une tension continue en tension alternative, un deuxième étage de conversion de la tension alternative délivrée par le premier étage en une tension continue réglable et des moyens d'isolation galvanique interposés entre les deux étages de conversion.

Avec ce type de convertisseur, afin de pouvoir efficacement délivrer la tension et le courant de sortie, sur toute la plage de fonctionnement prévue, il est nécessaire de dimensionner chaque étage en fonction de la tension et du courant maximum à fournir.

Ainsi, par exemple, pour pouvoir délivrer au maximum une tension de 300 V et un courant de 200 A, il est nécessaire de dimensionner chaque étage de manière à ce qu'ils puissent délivrer une puissance de 60 KVA.

Le but de l'invention est de pallier cet inconvénient et de fournir un convertisseur courant continu-courant continu dans lequel seul le dernier étage est dimensionné en fonction de la tension maximale à fournir.

Elle a donc pour objet un convertisseur courant continu-courant continu, du type précité, caractérisé en ce qu'il comporte en outre des moyens de conversion courant continu-courant continu de réglage de la tension de sortie du convertisseur intégrés au deuxième étage de conversion.

Le convertisseur selon l'invention peut en outre comporter une ou plusieurs des caractéristiques suivantes, prises isolément ou selon toutes les combinaisons techniquement possibles :

- les moyens de conversion courant continu-courant continu comportent un pont redresseur à pont milieu inductif;
- le deuxième étage de conversion comportant un pont de diodes montées en redresseur, les moyens de conversion comportent au moins un transistor fonctionnant en régime de commutation, lesdites diodes constituant des diodes roue libre pour le ou chaque transistor ;

- le ou chaque transistor est constitué par un transistor bipolaire à grille isolée ou un transistor de type MOS ;
- le convertisseur comporte en outre un dispositif de commande de la commutation du ou de chaque transistor de manière à inhiber leur fonctionnement lorsque la tension de sortie du convertisseur est inférieure à une valeur de tension de seuil et à élever la tension de sortie du convertisseur lorsque la tension à délivrer est supérieure à ladite valeur de tension de seuil ;
- le dispositif de commande est un dispositif de commande de type à modulation par largeur d'impulsion;
- les moyens d'isolation galvanique comportent un transformateur dont le rapport de transformation constitue un moyen de réglage de la tension de sortie ; et
- le ou chaque transistor est connecté à un emplacement de connexion ayant une valeur de potentiel variable.

D'autres caractéristiques et avantages ressortiront de la description suivante, donnée uniquement à titre d'exemple et faite en référence aux dessins annexés sur lesquels:

- la figure 1 est une courbe montrant la variation de la tension de sortie en fonction du courant de sortie à délivrer par le convertisseur selon l'invention ;
- la figure 2 est un schéma synoptique du convertisseur selon l'invention ;
- la figure 3 illustre un mode de réalisation du convertisseur selon l'invention ;
- la figure 4 est un schéma simplifié du convertisseur de la figure 3 permettant d'illustrer son fonctionnement ;
- les figures 5a à 5g sont des chronogrammes illustrant la forme de signaux électriques en des points caractéristiques du circuit de la figure 3, pour une tension de sortie inférieure à la tension de seuil ;
- les figures 6a à 6g sont des chronogrammes montrant la forme de signaux électriques en des points caractéristiques du circuit de la figure 3, pour des tensions de sortie supérieures à la tension de seuil ; et
- la figure 7 illustre un deuxième mode de réalisation du convertisseur de la figure 2.

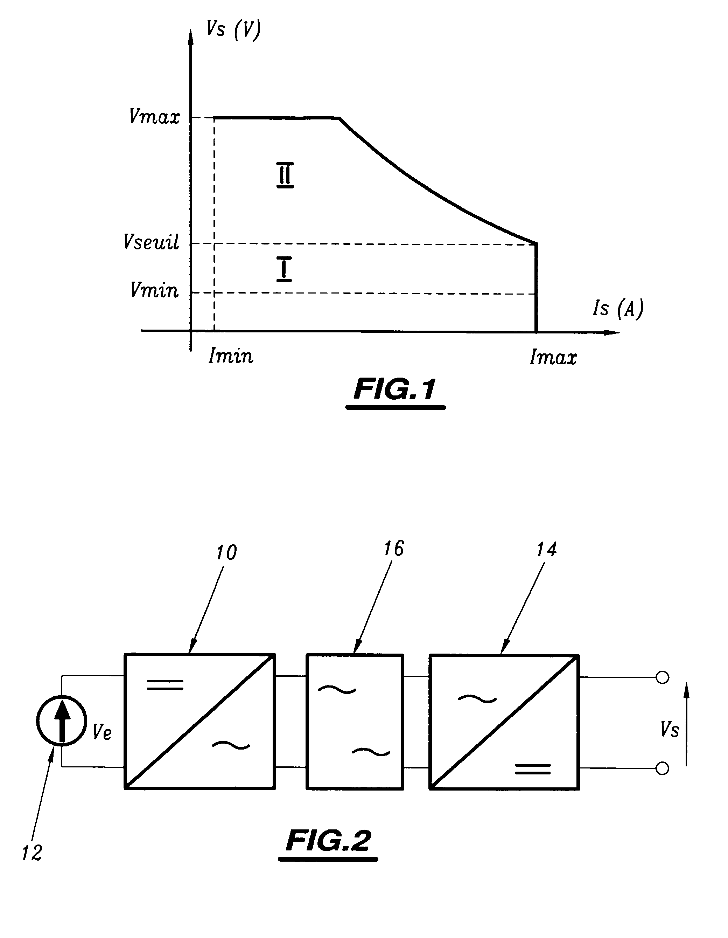

Sur la figure 1, on a représenté la variation de la tension de sortie $V_s$ en fonction du courant de sortie $I_s$ d'un convertisseur courant continu-courant continu (DC/DC) à isolation galvanique conforme à l'invention.

On voit sur cette figure que cette caractéristique est délimitée par un courant maximum ($I_{max}$), une tension maximale ($V_{max}$) et une puissance maximale ($P_{max}$).

Sur la figure 2, on a représenté le schéma synoptique d'un convertisseur permettant d'obtenir cette caractéristique.

Le convertisseur représenté sur cette figure comporte un premier étage 10 de conversion (DC/AC) d'une tension continue d'entrée délivrée par une source 12 de tension continue, en une tension alternative, et un deuxième étage 14 de conversion (AC/DC) de la tension alternative délivrée par le premier étage 10 en une tension continue réglable.

La sortie du deuxième étage 14 de conversion constitue la sortie du convertisseur DC/DC.

Entre les premier 10 et deuxième 14 étages, sont prévus des moyens d'isolation galvaniques, constitués par un transformateur 16 de type classique.

Le convertisseur courant continu-courant continu permet, à partir de la source 12 de tension continue délivrant une tension $V_e$, de créer une nouvelle source de tension continue, délivrant une tension $V_s$, dont la grandeur nominale est réglable à volonté dans une grande plage de tension, c'est-à-dire une tension comprise entre une tension maximale $V_{max}$ et une tension minimale $V_{min}$, et ce pour différentes valeurs de courant, c'est-à-dire comprises entre un courant maximum $I_{max}$ et un courant minium $I_{min}$ (figure 1).

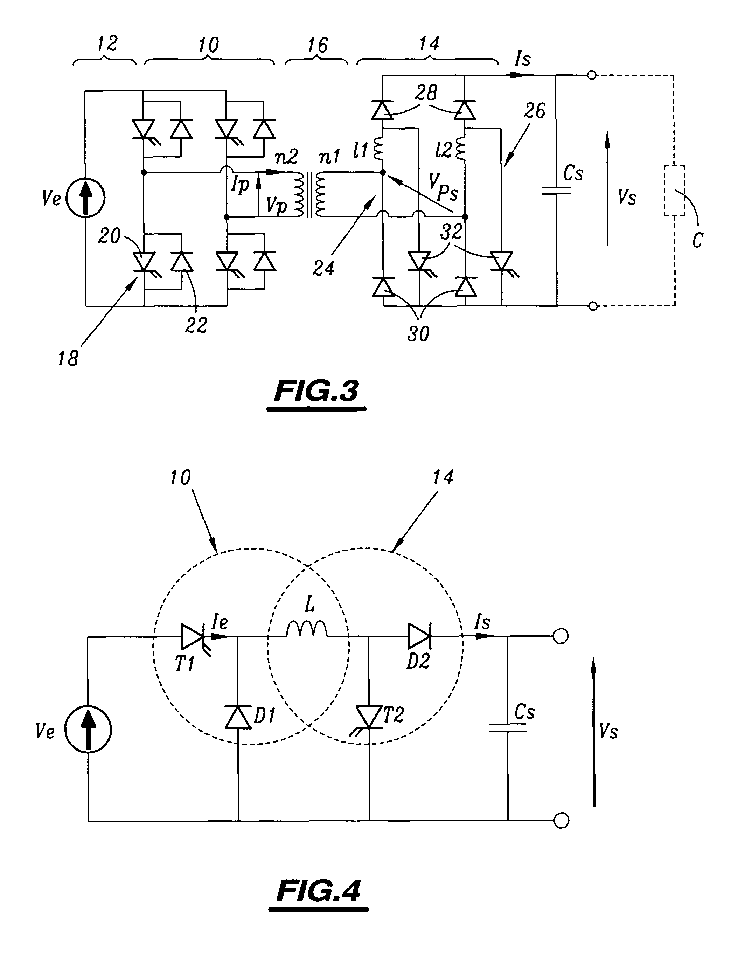

La description complète du circuit électronique du convertisseur représenté sur la figure 2 va maintenant être faite en référence à la figure 3.

On voit sur cette figure que le premier étage 10 de conversion de la tension continue $V_e$ délivrée par la source 12 de tension en une tension $V_p$ alternative présentée en entrée du transformateur 16 est constituée par un onduleur comportant un ensemble de cellules de commutation, telles que 18, montées en pont.

Chaque cellule 18 comporte un transistor 20 fonctionnant en régime de commutation, par exemple un transistor bipolaire à grille isolée (IGBT) ou un transistor MOS, dont la commutation est pilotée par un circuit de commande approprié de type classique et non représenté.

Une diode de roue libre 22 est branchée en parallèle sur chaque transistor 20, comme cela est classique.

L'onduleur 10, piloté par le circuit de commande, transforme la tension continue délivrée par la source 12 en tension alternative $V_p$ à haute fréquence, en forme de créneau, dont la valeur efficace est réglable en fonction du rapport cyclique des cellules de commutation 18.

Le transformateur 16, placé en sortie de l'onduleur 10, est constitué par un transformateur à haute fréquence réalisant l'isolation galvanique entre le premier étage 10 de conversion et le deuxième étage 14 de conversion, et assure l'adaptation des niveaux de tension de sortie, par choix du rapport entre $N_2$ et $N_1$, représentant respectivement le nombre d'enroulements du secondaire et du primaire du transformateur.

Le deuxième étage 14 de conversion est constitué par l'association d'un circuit redresseur assurant la conversion de la tension alternative délivrée par le transformateur 16 en une tension continue et d'un circuit de conversion courant continu-courant continu intégré au circuit redresseur de manière à élever sa tension de sortie, de manière à obtenir une tension continue $V_s$ dont la valeur peut être modifiée, comme décrit en détail par la suite.

Ainsi, l'étage 14 de conversion AC/DC constitue un circuit redresseur élévateur. Il comporte deux branches identiques, respectivement 24 et 26, raccordées chacune à une sortie du transformateur 16 et assurant chacune le redressement et l'élévation de la tension pour une des alternances de la tension reçue en entrée.

Comme on le voit sur la figure 3, chacune des branches 24 et 26 est constituée par l'association en série de deux diodes 28 et 30, entre lesquelles est disposée une inductance, respectivement L1 et L2 assurant, conjointement avec les diodes 28 et 30, le redressement de la tension et constituant un réservoir d'énergie électrique utilisé pour l'élévation de la tension.

Chaque branche 24 et 26 est complétée par un transistor de commutation 32 reliant les anodes des diodes 28 et 30.

Comme pour l'onduleur 10, les transistors 32 sont constitués par des transistors bipolaires à grille isolée (IGBT) ou des transistors MOS et sont pilotés par le circuit de commande, de préférence par modulation de largeur d'impulsion, de manière à élever la tension $V_s$ fournie en sortie du convertisseur, en fonction du rapport cyclique des commutations.

Ainsi, le deuxième étage 14 de conversion comporte deux circuits imbriqués, à savoir un circuit redresseur en pont à point milieu inductif constitué par les diodes 28 et 30 et par les inductances L1 et L2, et un circuit élévateur de tension, constitué par les transistors 32 fonctionnant conjointement avec les diodes L1 et L2, comme mentionné précédemment, et pour lesquels les diodes 28 et 30 constituent des diodes roue libre.

On voit enfin sur la figure 3 que le circuit est complété, en sortie, par un condensateur $C_s$ de sortie assurant le filtrage de la tension de sortie $V_s$, aux bornes duquel est raccordée une charge C, représentée en pointillés.

En se référant à nouveau à la figure 1, on voit que, de part et d'autre d'une tension de seuil $V_{seuil}$, deux zones de fonctionnement peuvent être définies, à savoir une première zone I de faible tension limitée en courant, et une zone II à forte tension limitée en puissance.

Dans la première zone I, seul l'onduleur 10 agit et permet le réglage du niveau de tension de sortie, alors que dans la zone II, l'onduleur 10 délivre la tension maximale qu'il est capable de délivrer, l'étage 14 redresseur élévateur adaptant le niveau de tension de sortie au niveau souhaité, sous le contrôle du circuit de commande.

Afin d'expliquer le fonctionnement du convertisseur représenté sur la figure 3, on a illustré sur la figure 4 le schéma équivalent de ce circuit, dans laquelle la composante alternative due à l'utilisation du transformateur a été supprimée.

On voit sur cette figure 4 que le premier étage 10 de conversion constitue un hacheur abaisseur de tension, le deuxième étage 14 constituant un hacheur élévateur de tension.

Sur cette figure, les transistors T1 et T2 correspondent respectivement aux transistors 20 de l'onduleur 10 et aux transistors 32 du redresseur élévateur 14, les diodes D1 et D2 correspondent respectivement aux diodes 22 de l'onduleur 10 et aux diodes 32 du redresseur élévateur 14, et l'inductance L représente les inductances L1 et L2 du redresseur 14.

Le hacheur abaisseur 10 est dimensionné pour une tension d'alimentation $V_e$ et un courant de sortie $I_s$ donnés et possède donc un fonctionnement limité en courant.

Ce convertisseur 10 DC/AC adapte la tension de sortie en autorisant un transfert plus ou moins important d'énergie entre la source 12 et la charge C. Son dimensionnement lui permet donc de fournir au mieux le courant nominal de sortie $I_s$ sous la tension nominale d'entrée. Il est par conséquent adapté pour un fonctionnement dans lequel la caractéristique de sortie est comprise en deçà d'une valeur de courant maximale $I_{max}$.

Au contraire, le hacheur élévateur 14 est dimensionné pour une tension de sortie $V_s$ maximale et un courant d'entrée $I_e$ donné. Ce hacheur étant alimenté par une source de tension alternative, on obtient alors un fonctionnement limite à puissance constante, le tout étant limité par une tension de sortie maximale $V_{max}$. Il convient pour un fonctionnement dans lequel la caractéristique est à puissance maximale c'est-à-dire dans la zone II.

On conçoit donc que chacun des convertisseurs 10 et 14 s'adapte exactement à chacune des zones de la plages de fonctionnement.

Par conséquent, seul le deuxième étage est dimensionné en fonction de la tension et de la puissance maximales à fournir, le premier étage étant dimensionné pour l'obtention d'une puissance nominale.

On notera que quelle que soit la commande sur le transistor T1, la diode D1 permet en permanence d'assurer la continuité du courant dans l'inductance L et donc le fonctionnement du hacheur élévateur 14. Il en est de même pour le cas inverse avec la diode D2 qui permet toujours la continuité du courant quelle que soit la commande sur le transistor T2.

Par conséquent, la caractéristique de sortie du convertisseur correspond au produit des deux caractéristiques des hacheurs abaisseur 10 et élévateur 14, et est donnée par la relation suivante :

$$V_s = \frac{\alpha_1}{1-\alpha_2} \times V_e \qquad (1)$$

dans laquelle $\alpha_1$ et $\alpha_2$ désignent les rapports cycliques des hacheurs 10 et 14, respectivement.

Comme mentionné précédemment, dans le cas où l'on souhaite fournir une tension $V_s$ inférieure à la valeur de la tension de seuil $V_{seuil}$, seul l'onduleur 10 agit, cet onduleur assurant le réglage du niveau de la tension de sortie, les transistors de l'étage redresseur élévateur 14 ne sont pas pilotés, et le rapport cyclique $\alpha_2$ (relation 1) est fixé à 0, $\alpha_1$ étant compris entre 0 et 1.

Dans ce cas, le rapport de transformation du transformateur 16 constitue un moyen de réglage de la tension de sortie $V_s$.

Au contraire, pour délivrer une tension de sortie supérieure à la valeur de seuil $V_{seuil}$, le rapport cyclique $\alpha_1$ de l'onduleur 10 est fixé à 1, et le rapport cyclique $\alpha_2$ du redresseur élévateur 14 est compris entre 0 et une valeur appropriée pour l'obtention de la tension de sortie $V_s$ souhaitée.

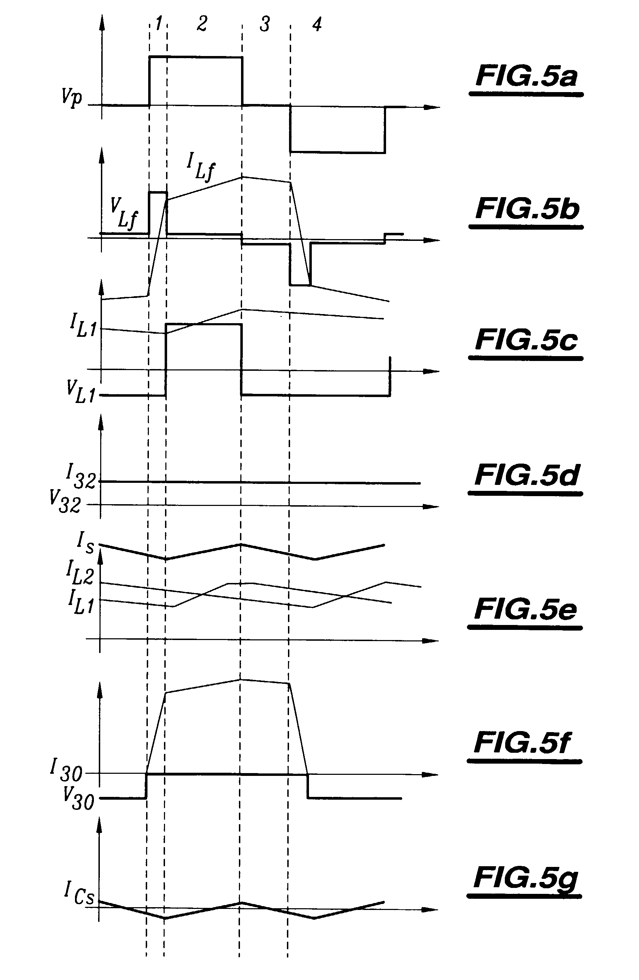

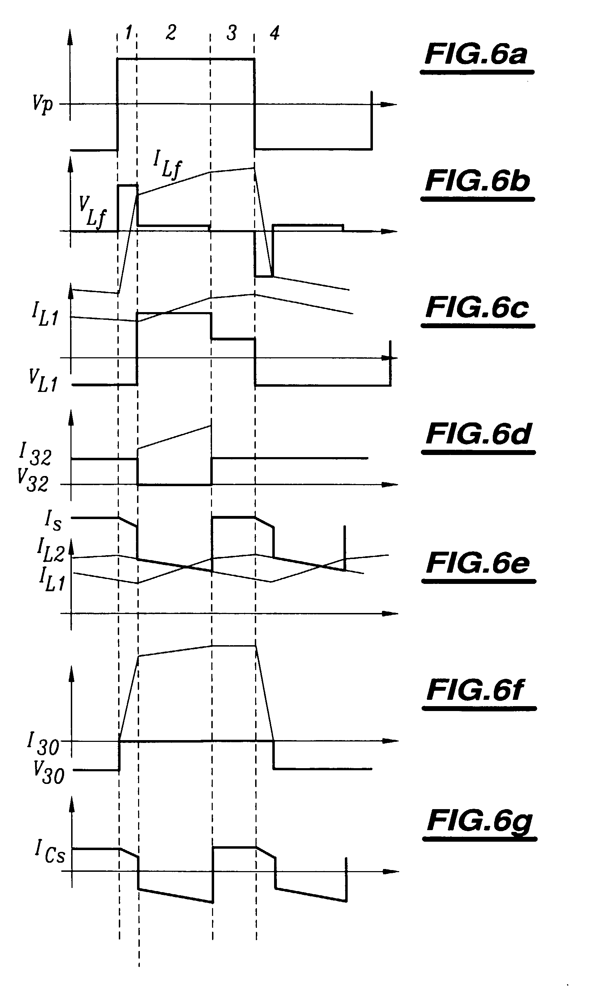

Sur les figures 5a à 5g et 6a à 6g, on a représenté les chronogrammes de signaux électriques à des emplacements caractéristiques du circuit de la figure 3, respectivement en mode abaisseur et en mode élévateur de tension.

Dans ce qui suit, on a considéré que le transformateur 16 possède une inductance de fuite Lf faible devant celle des inductances L1,L2, l'inductance de magnétisation du transformateur 16 n'étant pas pris en compte.

On a également considéré que la valeur du condensateur de sortie $C_S$ est suffisamment élevée pour filtrer convenablement la tension de sortie et que le convertisseur fonctionne en régime établi.

Sur les figures 5a à 5g et 6a à 6g :

- les figures 5a et 6a représentent l'allure de la tension alternative $V_p$ ;
- les figures 5b et 6b représentent l'allure du courant $I_{Lf}$ et de la tension $V_{Lf}$ de l'inductance Lf, $I_{Lf}$ étant égale au courant $I_p$ du primaire du transformateur 16, selon les hypothèses exposées précédemment ;
- les figures 5c et 6c représentent l'allure du courant et de la tension de l'inductance L1, respectivement $I_{L1}$ et $V_{L1}$ ;
- les figures 5d et 6d représentent l'allure du courant et de la tension du transistor 32, respectivement $I_{32}$ et $V_{32}$ ;
- les figures 5e et 6e représentent l'allure des courants circulant dans les inductances L1 et L2 ; respectivement $I_{L1}$ et $I_{L2}$, ainsi que du courant de sortie $I_s$ ;
- les figures 5f et 6f représentent l'allure du courant et de la tension aux bornes des diodes 30, respectivement $I_{30}$ et $V_{30}$ ; et
- les figures 5g et 6g représentent l'allure du courant $I_{Cs}$ circulant dans le condensateur de sortie $C_S$.

En se référant tout d'abord au chronogramme représenté sur les figures 5a à 5g, on voit sur ces figures que quatre phases distinctes désignées par les numéros 1 à 4 peuvent être identifiées.

Au cours de la phase 1, la tension alternative $V_p$ devient positive et égale à la tension d'entrée $V_e$. Le courant $I_p$ circulant dans le primaire du transformateur 16 augmente rapidement en changeant de signe.

Au cours de cette première phase, la tension de sortie $V_{Ps}$ en sortie du transformateur 16 est nulle. Cette phase s'achève lorsque le courant circulant dans la diode 30 atteint la valeur du courant de sortie $I_s$.

Lors de la phase suivante 2, la tension $V_{Ps}$ de sortie du transformateur est supérieure à la tension de sortie $V_s$. L'inductance L1 emmagasine de l'énergie à partir de la source 12 d'alimentation en tension continue. Cette phase s'achève à la fin du rapport cyclique de l'onduleur 10.

On notera que la tension présente aux bornes de l'inductance L1 est égale à $V_{Ps}-V_S$.

Lors de la phase 3 suivante, l'onduleur 10 est commandé de façon à courtcircuiter le transformateur 16. Un courant de circulation est ainsi maintenu dans ce transformateur. Cette phase s'achève par la commande de l'onduleur 10 en vue d'appliquer la tension d'entrée $V_e$ au primaire du transformateur 16.

Lors de la dernière phase 4, le fonctionnement du circuit correspond à celui obtenu lors de la phase 1, mais le rôle des inductances L1,L2 et des diodes 30 est inversé, de sorte que la tension $V_p$ devient négative et égale $-V_e$.

En se référant aux figures 6a à 6g, on voit également que quatre phases distinctes et successives peuvent être distinguées.

Sur ces chronogrammes, les phases 1 et 4 correspondent respectivement aux phases 1 et 4 mentionnées précédemment en référence aux figures 5a à 5g.

La phase 2 débute lors de la commande du transistor 32. Dès lors, l'inductance L1 emmagasine de l'énergie délivrée à partir de la source d'entrée $V_e$. La tension aux bornes de l'inductance L1 est égale à la tension $V_{Ps}$ présente en sortie du transformateur 16. Cette phase s'achève à la fin du rapport cyclique du transistor 32 qui est alors commandée à la fermeture.

Lors de la phase 3 suivante, l'inductance L1 emmagasine de l'énergie à partir de la source d'entrée $V_e$.

La tension aux bornes de l'inductance Ll est égale à $V_{Ps}-V_s$. Cette phase s'achève à la fin du rapport cyclique de l'onduleur 10, dont la valeur est égale à 1.

On conçoit que l'invention qui vient d'être décrite permet d'obtenir un dimensionnement optimal du convertisseur pour l'obtention d'une caractéristique prédéterminée.

En effet, seul le deuxième étage 14 de conversion doit être dimensionné en fonction de la tension et de la puissance maximales à fournir. Au contraire, la premier étage 10 de conversion peut être dimensionné en fonction de la tension et du courant d'entrée, soit, dans l'exemple précité, par exemple, pour une puissance égale à 36 KVA, si cette valeur correspond à la puissance maximale souhaitée.

Les hacheurs parallèles de sortie entrelacés au sein du redresseur à point milieu inductif permettent de réduire l'ondulation du courant de sortie et ainsi de réduire les contraintes du ou des condensateurs de filtrage.

On notera par ailleurs qu'il est possible de piloter l'onduleur 10 et le redresseur 14 selon des fréquences primaire et secondaire différentes. La fréquence utilisée dans ce circuit étant constante, on facilite grandement la commande des cellules de commutation qui peuvent dès lors être pilotées par des dispositifs de commande relativement simples, comme par exemple des commandes basées sur une modulation en largeur d'impulsion.

Dans le circuit représenté sur la figure 3, les transistors 32 sont branchés entre les anodes des diodes correspondantes.

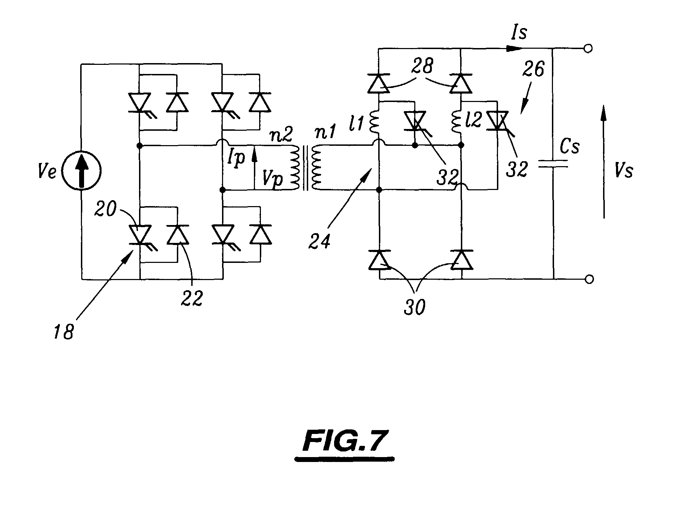

Il serait toutefois possible, en variante, comme représenté sur la figure 7, de connecter ces transistors entre une sortie du transformateur et l'anode d'une diode correspondante.

Ce mode de connexion particulier des transistors 32 permet de connecter ces derniers à des potentiels variables, ce qui permet d'obtenir un mode de fonctionnement de type "Thyristor", permettant ainsi la réduction des pertes par commutation dans le hacheur élévateur 14.

## Revendications

1. Convertisseur courant continu-courant continu, comprenant un premier étage (10) de conversion d'une tension continue ($V_e$) en tension alternative, un deuxième étage (16) de conversion de la tension alternative délivrée par le premier étage (10) en tension continue réglable, des moyens (16) d'isolation galvanique interposés entre les deux étages de conversion, et des moyens de conversion (L1,L2,32,28,30) courant continu-courant continu de réglage de la tension de sortie du convertisseur intégrés au deuxième étage (16) de conversion, caractérisé en ce que le deuxième étage (16) de conversion comportant un pont de diodes (28,30) montées en redresseur, les moyens de conversion comportent au moins un transistor (32) fonctionnant en régime de commutation, lesdites diodes (28,30) constituant des diodes de roue libre pour le ou chaque transistor (30).

2. Convertisseur selon la revendication 1, caractérisé en ce que les moyens de conversion courant continu-courant continu comportent un pont redresseur (28,30,L1,L2) à point milieu inductif.

3. Convertisseur selon l'une des revendications 1 et 2, caractérisé en ce que le ou chaque transistor (32) est constitué par un transistor bipolaire à grille isolée (IGBT) ou un transistor de type MOS.

4. Convertisseur selon l'une quelconque des revendications 1 à 3, caractérisé en ce qu'il comporte en outre un dispositif de commande de la commutation du ou de chaque transistor (32) de manière à inhiber leur fonctionnement lorsque la tension de sortie ($V_s$) du convertisseur est inférieure à une valeur de tension de seuil ($V_{seuil}$) et à élever la tension de sortie ($V_s$) du convertisseur lorsque la tension à délivrer est supérieure à ladite valeur de tension de seuil ($V_{seuil}$).

5. Convertisseur selon la revendication 4, caractérisé en ce que le dispositif de commande est un dispositif de commande de type à modulation par largeur d'impulsion.

6. Convertisseur selon l'une des revendications 4 et 5, caractérisé en ce que les moyens d'isolation galvanique comportent un transformateur (16) dont le rapport de transformation constitue un moyen de réglage de la tension de sortie.

7. Convertisseur selon l'une quelconque des revendications 1 à 6, caractérisé en ce que le ou chaque transistor (32) est connecté à un emplacement de connexion ayant une valeur de potentiel variable.

**_FIG.1_**

**_FIG.2_**

**FIG.3**

**FIG.4**

*FIG.5a*

*FIG.5b*

*FIG.5c*

*FIG.5d*

*FIG.5e*

*FIG.5f*

*FIG.5g*

FIG.6a

FIG.6b

FIG.6c

FIG.6d

FIG.6e

FIG.6f

FIG.6g

**FIG.7**

Office européen
des brevets

**RAPPORT DE RECHERCHE EUROPEENNE**

Numéro de la demande

EP 99 40 1221

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | US 5 742 495 A (BARONE FABIO) 21 avril 1998 (1998-04-21) * colonne 2, ligne 11 - ligne 32; figures 1,2 * * colonne 3, ligne 10 - ligne 13 * * colonne 3, ligne 36 - ligne 64 * * colonne 4, ligne 16 - ligne 19 * * colonne 6, ligne 3 - ligne 5; revendications 1,9 * | 1-4,6-8 | H02M3/335 |
| A | US 4 953 068 A (HENZE CHRISTOPHER P) 28 août 1990 (1990-08-28) * figure 1 * | 1-4,7 | |

DOMAINES TECHNIQUES RECHERCHES (Int.Cl.6)

H02M

Le présent rapport a été établi pour toutes les revendications

| Lieu de la recherche | Date d'achèvement de la recherche | Examinateur |
|---|---|---|
| LA HAYE | 17 septembre 1999 | Thisse, S |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 99 40 1221

La présente annexe indique les membres de la famille de brevets relatifs aux documents brevets cités dans le rapport de recherche européenne visé ci–dessus.
Lesdits members sont contenus au fichier informatique de l'Officeeuropéen des brevets à la date du
Les renseignements fournis sont donnés à titre indicatif et n'engagent pas la responsabilité de l'Office européen des brevets.

17-09-1999

| Document brevet cité au rapport de recherche | Date de publication | Membre(s) de la famille de brevet(s) | Date de publication |
|---|---|---|---|
| US 5742495   A | 21-04-1998 | AU    1570795  A<br>WO    9521486  A | 21-08-1995<br>10-08-1995 |
| US 4953068   A | 28-08-1990 | AUCUN | |

EPO FORM P0460

Pour tout renseignement concernant cette annexe : voir Journal Officiel de l'Office européen des brevets, No.12/82